# EUROPEAN PATENT APPLICATION

(11) **EP 1 764 540 A1**
(43) Date of publication of application: **21.03.2007**
(21) Application number: 05255779.0
(22) Date of filing: 19.09.2005
(51) Int. Cl.: F16L 9/16

(54) **Tubular body made of helically wound strip**

(71) Applicant: Shell Internationale Research Maatschappij B.V., 2596 HR The Hague (NL)
(72) Inventor: Burke, Raymond Nicholas, 2288 GS Rijswijk (NL); Witz, Joel Aron BPP Technical Services Ltd., London WC1E 7JN (GB)

(57) **Abstract**

A tubular body is provided, comprising an elongate strip helically wound to form a plurality of windings (4,6). Each winding has a radially outer portion (4a,6a), a radially inner portion (4b,6b) and an intermediate portion (4c,6c) interconnecting the outer and inner portions of the winding. The radially outer portion (4a) of a first winding of a pair of adjacent windings overlaps with the radially inner portion (6b) of a second winding of the pair thereby defining respective overlapping portions, the overlapping portions being bonded to each other by a layer of bonding material (10). The overlapping portion of at least one winding of the pair has a side edge (12) bonded to the intermediate portion of the other winding of the pair by the layer of bonding material (10a), said side edge extending inclined relative to the radial direction of the tubular body.

## Description

The present invention relates to a tubular body comprising an elongate strip helically wound to form a plurality of windings in overlapping mode, each winding having a radially outer portion, a radially inner portion and an intermediate portion interconnecting the outer and inner portions of the winding. The strip can be made, for example, of a high strength steel alloy. Such tubular bodies have the advantage that high internal pressures can be withstood for a helical strip having a relatively small wall thickness, hence for a tubular body of relatively low weight.

A tubular body of this type is disclosed in US patent No. 5,837,083. In the known tubular body, each winding is provided with ridges in the respective outer and inner portions of the winding. The ridges of the respective overlapping portions of adjacent windings are arranged in a complementary fashion. Further, the overlapping portions of the windings are, optionally, bonded to each other with an adhesive so as to provide axial load bearing capacity to the tubular body. Although, however, tubular body of this kind are capable of withstanding high internal pressures and, to a limited extent, axial loads, there is a need to increase the axial load bearing capacity of the tubular body.

It is therefore an object of the invention to provide an improved tubular body having an increased axial load bearing capacity.

In accordance with the invention there is provided a tubular body comprising an elongate strip helically wound to form a plurality of windings, each winding having a radially outer portion, a radially inner portion and an intermediate portion interconnecting the outer and inner portions of the winding, wherein the radially outer portion of a first winding of a pair of adjacent windings overlaps with the radially inner portion of a second winding of the pair thereby defining respective overlapping portions, the overlapping portions being bonded to each other by a layer of bonding material, and wherein the overlapping portion of at least one winding of the pair has a side edge bonded to the intermediate portion of the other winding of the pair by the layer of bonding material, said side edge extending inclined relative to the radial direction of the tubular body.

By virtue of the feature that the side edge is bonded to the intermediate portion of the adjacent winding by the layer of bonding material, and that the side edge extends inclined relative to the radial direction, it is achieved that a substantial portion of the axial load is transmitted between the side edge and the intermediate portion of the adjacent winding in the form of a shear load rather than a tensile load. This is an important feature since generally the bonding layer, such as an adhesive layer, will be weak in tension but strong in shear mode.

Furthermore, it is preferred that both side edges of the strip are bevelled so that both side edges of each winding extend inclined relative to the radial direction of the tubular body, whereby each bevelled side edge of a respective winding is bonded to the intermediate portion of an adjacent winding by the layer of bonding material. Thus, it is preferred that the radially outer portion of the first winding has a first side edge bonded to the intermediate portion of the second winding by the layer of bonding material, and that the radially inner portion of the second winding has a second side edge bonded to the intermediate portion of the first winding by the layer of bonding material.

The invention will be described hereinafter in more detail and by way of example, with reference to the accompanying drawings in which:
Fig. 1 schematically shows a side view of an embodiment of the tubular body according to the invention;
Fig. 2 schematically shows a longitudinal section through the tubular body of Fig. 1; and
Fig. 3 schematically shows detail A of Fig. 2.

In the Figures, like reference numerals relate to like components.

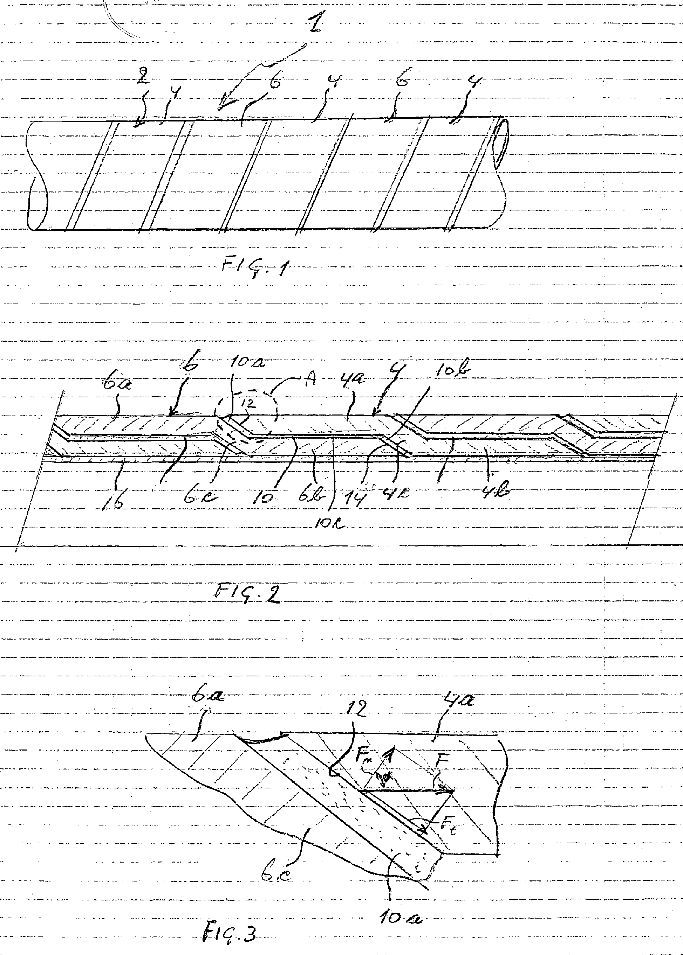

Referring to Figs. 1 and 2 there is shown a tubular body 1 including an elongate metal strip 2 helically wound in overlapping fashion so as to define a plurality of windings 4, 6. The strip 2 is made of a high-strength steel. Each winding 4 has a radially outer portion 4a, a radially inner portion 4b and an intermediate portion 4c interconnecting the outer and inner portions 4a, 4b. The windings 6 are identical to the windings 4, each winding 6 having a radially outer portion 6a, a radially inner portion 6b and an intermediate portion 6c interconnecting the outer and inner portions 6a, 6b. For each pair of adjacent windings 4, 6, the radially outer portion 4a of winding 4 overlaps with the radially inner portion 6b of the winding 6. A layer of adhesive 10 extends between the respective overlapping portions 4a, 6b of the windings 4, 6 so as to bond the overlapping portions 4a, 6b to each other.

The radially outer portion 4a of the winding 4 has a bevelled side edge 12 extending inclined relative to the radial direction of the tubular body 1. The layer of adhesive 10 has a portion 10a bonding the bevelled side edge 12 to the intermediate portion 6c of the winding 6. The intermediate portion 6c extends substantially parallel to the side edge 12.

In a similar manner, the radially inner portion 6b of the winding 6 has a bevelled side edge 14 extending inclined relative to the radial direction of the tubular body 1. The layer of adhesive 10 has a portion 10b bonding the bevelled side edge 14 to the intermediate portion 4c of the winding 4, and a central portion 10c bonding the longitudinal surfaces of the overlapping portions 4a, 6b to each other. The intermediate portion 4c of winding 4 extends substantially parallel to the side edge 14. As is shown in Fig. 2, the angles of inclination of the respective side edges 12, 14 are substantially identical to each other.

The tubular body is furthermore provided with an inner lining 16 of a material selected in accordance with requirements relating to the fluid to be contained in the tubular body 1. For example, the inner lining 16 can be made of a polymeric coating of thermoplastic or thermosetting material, or a metal such as corrosion resistant steel.

During normal operation pressurized fluid is contained in, or transported through, the tubular body 1. By virtue of their helical arrangement, the windings 2, 2a are capable of withstanding high fluid pressures in the tubular body 1. Thus the resulting hoop stresses in the windings 2, 2a remain within acceptable limits even for relatively small thickness of the windings 2, 2a. Apart from being subjected to loads in the hoop direction, the windings 2, 2a, can also be subjected to axial loading, for example, during pressure testing of the tubular body 1 with end caps (not shown) provided thereto, or during bending or stretching of the tubular body 1. The adhesive layer 10 transmits the axial load between adjacent windings 4, 6 whereby each of the adhesive layer portions 10a, 10b, 10c contributes to the load transmission.
Referring further to Fig. 3, the adhesive layer portion 10a transmits an axial load F between the bevelled side edge 12 and the intermediate portion 6c of the winding 6. The axial load F has a component Ft parallel to the side edge 12 and a component Fn normal to the side edge 12. The component Ft induces a shear stress in the adhesive layer portion 10a whereas the component Fn induces a tensile stress in the adhesive layer portion 10a. The relative magnitudes of the components Ft and Fn depend on the inclination angle α of the side edge 12. Thus, the magnitude of Ft increases and the magnitude of Fn decreases with increasing inclination angle α, and vice versa. The adhesive layer 10 inherently is relatively weak in tension mode but strong in shear mode. It is therefore an important feature of the invention that the side edge 12 and the intermediate portion 6c of winding 6 extend inclined relative to the radial direction of the tube. In this manner it is achieved that the adhesive layer portion 10a transmits a substantial part of the axial load F in the form of shear stresses rather than by tensile stresses, so that the adhesive layer portion 10a contributes significantly to the transmission of axial loads.

## Claims

1. A tubular body comprising an elongate strip helically wound to form a plurality of windings, each winding having a radially outer portion, a radially inner portion and an intermediate portion interconnecting the outer and inner portions of the winding, wherein the radially outer portion of a first winding of a pair of adjacent windings overlaps with the radially inner portion of a second winding of the pair thereby defining respective overlapping portions, the overlapping portions being bonded to each other by a layer of bonding material, and wherein the overlapping portion of at least one winding of the pair has a side edge bonded to the intermediate portion of the other winding of the pair by the layer of bonding material, said side edge extending inclined relative to the radial direction of the tubular body.

2. The tubular body of claim 1, wherein said intermediate portion of the other winding extends substantially parallel to said side edge.

3. The tubular body of claim 1 or 2, wherein the radially outer portion of the first winding has a first side edge bonded to the intermediate portion of the second winding by the layer of bonding material.

4. The tubular body of any one of claims 1-3, wherein the radially inner portion of the second winding has a second side edge bonded to the intermediate portion of the first winding by the layer of bonding material.

5. The tubular body of any one of claims 1-4, wherein the tubular body is subjected to a tension force, and wherein each side edge transmits at least a portion of the tension force to the intermediate portion to which the side edge is bonded, via the layer of bonding material.

6. The tubular body of any one of claims 1-5, wherein the bonding material is an adhesive.

7. The tubular body substantially as described hereinbefore with reference to the accompanying drawings.
